# EUROPEAN PATENT APPLICATION

(11) **EP 1 431 867 A1**
(43) Date of publication of application: **23.06.2004**
(21) Application number: 02028694.4
(22) Date of filing: 21.12.2002
(51) Int. Cl.: G06F 3/033

(54) **System for displaying a graphical representation**

(71) Applicant: Voith Paper Patent GmbH, 89522 Heidenheim (DE)
(72) Inventor: Muench, Rudolf, 89551 Koenigsbronn (DE); Enholm, Morten, 1528 Moss (NO); Pedersen, Tom Arild, 0655 Oslo (NO)

(57) **Abstract**

A system for displaying a graphical representation having at least one scaling axis comprises a computer, a display and a pointer device. The displaying system is laid out for a scaling operation wherein the pointer device is used to click on to a scaling axis of the graphical representation or a symbol thereof and the scaling is changed by a drag operation performed by means of the pointer device so that the displayed graphical representation is continuously updated during the drag operation.

## Description

The present invention relates to a system for displaying a graphical representation having at least one scaling axis.

Coordinate systems are used in many areas for screen operation of control systems, for diagnostic systems and in related areas. Examples for two-dimensional coordinate systems are displays of time trends, spectra, cross directional quality profiles, and/or the like. Examples for three-dimensional coordinate systems are waterfall diagrams to display the development of spectra over time, or color maps, to visualize the development of cross directional quality profiles over time.

However, coordinate systems are in many cases difficult to use, especially regarding the scaling of the axes. The known display systems of the above-referenced kind comprise the following operation sequence:
1) a pointer device (e.g. a mouse) is used to select a scaling boundary value or a value defining the scaling by a mouse click, e.g. the lowest value of the x-axis;
2) to change the scaling value by entering a number or by using increment/decrement buttons;
3) the result of the scaling change becomes visible;
4) the pointer device is used to point to the next scaling value, e.g. the highest value of the x-axis;
5) like step 2);
6) like step 3).

Steps 4), 5) and 6) can be repeated several times until all scaling parameters are changed according to user desires.

In some cases a further step is needed at the beginning, with which step the pointer device is used to open a menu or a pop up window which gives access to the scaling data, on which steps 1) and 2) are performed.

In most applications two values are needed for each scaling dimension. These two values are usually defined as either "high" and "low" boundaries of the displayed data, or "mean value" and "span". The "mean value" is sometimes also called "offset", the "span" is sometimes given as a "scaling factor".

Thus, a typical two-dimensional coordinate system requires the change of four values to define a user desired scaling. If there are multiple curves in the same coordinate system with independent scaling requirements, for example three scaling requirements, twelve values have to be changed. This consumes time and it is often hard to overlook for the user, what the scaling changes will do to the curve. Thus, usually the user iteratively approaches an "optimum" scaling.

An object of the invention is to set forth a more intuitive way for scaling operations and to eliminate the above-mentioned problems.

The present invention provides a system for displaying a graphical representation having at least one scaling axis, comprising: a computer, a display and a pointer device; said displaying system being laid out for a scaling operation wherein the pointer device is used to click on to a scaling axis of the graphical representation or a symbol thereof and the scaling is changed by a drag operation performed by means of the pointer device so that the displayed graphical representation is continuously updated during the drag operation.

With this inventive system a more intuitive way for scaling operations is provided. Less operation steps are required, and the feedback is given to the uses immediately. Thus, while continually changing the scaling, the changes of the graphical representation, e.g. a diagram and/or the like, can be viewed. The inventive system allows the user a much better control of scaling.

The graphical representation can, e.g. be a graphical representation for numerical data.

In a preferred embodiment of the system according to the present invention, the graphical representation comprises at least one coordinate system.

The displaying system is preferably laid out for a scaling operation wherein the pointer device is clicked directly on to the scaling axis. Alternatively, the pointer device may be clicked on to a symbol of the scaling axis. In this case, the symbol of the scaling axis can preferably be located at any place of the display. The symbol of the scaling axis may, e.g., be located in a pop up window.

According to another advantageous embodiment of the inventive system the symbol of the scaling axis may comprise a slider.

In an advantageous embodiment a high value and/or a low value of the scaling axis is changed by a corresponding drag operation. In this case, the pointer device preferably comprises two pointer buttons for changing the high value and the low value, respectively.

Alternatively or additionally a mean value and/or the span of the scaling axis is advantageously changed by a corresponding drag operation. In this case, the pointer device preferably comprises two pointer buttons for changing the mean value and the span, respectively.

According to another advantageous embodiment of the inventive system, the display has associated with the scaling axis a sensitive area for changing the high value and/or a sensitive area for changing the low value of the scaling axis by a corresponding drag operation.

Alternatively or additionally, the display may have associated with the scaling axis a sensitive area for changing the mean value and/or a sensitive area for changing the span of the scaling axis by a corresponding drag operation.

In an expedient practical embodiment, before carrying out the drag operation, the pointer device is used to point to a selector to choose which scaling parameter is to be changed.

Preferably, the pointer device comprises a mouse, a touch pad, a touch screen and/or the like.

The system according to the present invention allows to a user a much better control of scaling. For example, it allows visual correlation of two curves, by quickly adjusting the scaling of one curve in either dimension, until the two curves can be compared easily.

"Drag"-operations are very intuitive, and proved to increase operation comfort also in other areas like zooming, e.g. defining the zoom-in area by click and move the pointer over the interested part of a graphical object, moving graphical objects, e.g. windows, and rotating of objects, e.g. in drawing programs. The same advantage is available now for scaling operations.

The above-mentioned and other features and advantages of the present invention will become more apparent by reference to the following description of exemplary embodiments of the invention taken in conjunction with the accompanying drawings, wherein:
- Figure 1: shows the operation of a trend picture with three curves, three y-axes, and one x-axis which is common for all curves, and
- Figure 2: shows the operation of a color map display.

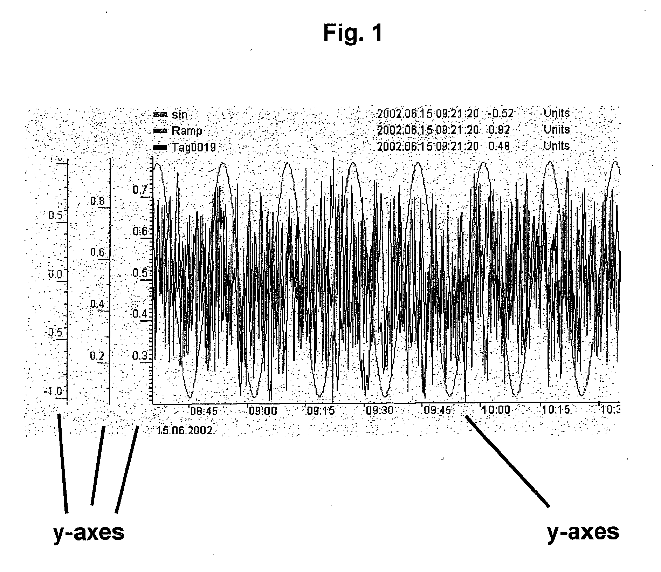

The corresponding embodiments of the system for displaying a graphical representation comprises a computer, a screen or display and a pointer device like a mouse, a touch pad, a touch screen and/or the like. The pointer device needs to be able to use click and drag operations, analog to a mouse with at least one button. The computer displays a coordinate system, or any other graphical representation for numerical data, with at least one scaling axis and/or corresponding symbols. The scaling operation can be performed by a user of the pointing or pointer device, e.g. in the following steps:
1) the pointer device is used to point or click on to an axis, or a symbol thereof, of the coordinate systems;
2) scaling is changed with "drag" operations which means click and move, while the click is still active; the displayed information, i.e. the curve in the trend display of figure 1, is continuously updated during the moving action.

The symbol for the axis can be i.e. a slider symbol, which can be located at any place on the user screen or display, i.e. also in a pop up window. In particular the above step 2) gives advantage for the user. With the corresponding feature, the curve in the trend display is continuously updated during the drag operation.

Preferably it is pointed to the axis directly instead to a slider, because this is even more intuitive for the user. However, also a slider could be used.

To change the "high" and "low" value, or the "mean value" and "span", two pointer buttons can be used. For example, the mean value could be changed by a drag operation with the left mouse button, and the span could be changed by a drag operation with the right mouse button.

Alternatively, the screen or display could have associated to an axis a sensitive area to adjust the span and another sensitive area to adjust the mean value by a drag operation. In this case one mouse button would be sufficient. It is also possible to control either span, mean value, low or high value, by having four sensitive screen or display areas for one axis.

It would also be possible to have a two-stage process:
1) point to a selector, to choose which scaling parameter has to be changed;
2) point to a sensitive area, i.e. a symbol for the axis, and drag to change the corresponding value.

Also in this case one mouse button would be sufficient.

Preferred are embodiments with two mouse buttons, because of smaller space requirements in the display, wherein only one pointer sensitive area is required per axis.

Figure 1 shows an exemplary embodiment for the operation of a time trend picture with three curves, three y-axes, and one x-axis which is common for all curves.

The operation of this time trend picture can, e.g., be as follows:
independently for each y-axis:
   - left click + drag: move scaling (add offset)
   - right click + drag up: increase scaling factor
   - right click + drag down: decrease scaling factor
for the common x-axis:
   - left click + drag: move scaling (add offset)
   - right click + drag right: increase scaling factor
   - right click + drag left: decrease scaling factor ("offset and scaling factor" work here only after zooming in)

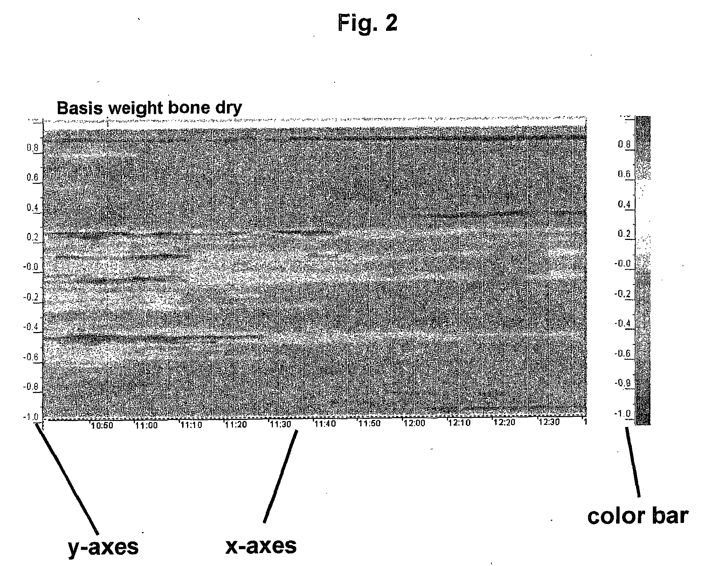

Figure 2 shows the operation of a color map display (operation like trend).

The operation of the left y-axis can be as follows:
- left click + drag: move scaling (add offset)
- right click + drag up: increase scaling factor
- right click + drag down: decrease scaling factor

The operation of the x-axis can be as follows:
- left click + drag: move scaling (add offset)
- right click + drag right: increase scaling factor
- right click + drag left: decrease scaling factor

The operation of the right y-axis or color bar could be as follows:
- left click + drag: move scaling
- right click + drag up: increase scaling factor
- right click + drag down: decrease scaling factor

The color bar does not change while scaling.

## Claims

1. System for displaying a graphical representation having at least one scaling axis, comprising: a computer, a display and a pointer device; said displaying system being laid out for a scaling operation wherein the pointer device is used to click on to a scaling axis of the graphical representation or a symbol thereof and the scaling is changed by a drag operation performed by means of the pointer device so that the displayed graphical representation is continuously updated during the drag operation.

2. System according to claim 1, wherein
said graphical representation is a graphical representation for numerical data.

3. System according to claim 1 or 2, wherein
said graphical representation comprises at least one coordinate system.

4. System according to any one of the preceding claims, wherein
said pointer device is clicked directly on to the scaling axis.

5. System according to any one of the claims 1 to 3, wherein
said pointer device is clicked on to a symbol of the scaling axis.

6. System according to claim 5, wherein
said symbol of the scaling axis can be located at any place of the display.

7. System according to claim 5 or 6, wherein
said symbol of the scaling axis is located in a pop up window.

8. System according to any one of the preceding claims, wherein
said symbol of the scaling axis comprises a slider.

9. System according to any one of the preceding claims, wherein
a high value and/or a low value of the scaling axis is changed by a corresponding drag operation.

10. System according to claim 9, wherein
said pointer device comprises two pointer buttons for changing the high value and the low value, respectively.

11. System according to any one of the preceding claims, wherein
a mean value and/or the span of the scaling axis is changed by a corresponding drag operation.

12. System according to claim 11, wherein
said pointer device comprises two pointer buttons for changing the mean value and the span, respectively.

13. System according to any one of the preceding claims, wherein
the display has associated with the scaling axis a sensitive area for changing the high value and/or a sensitive area for changing the low value of the scaling axis by a corresponding drag operation.

14. System according to any one of the preceding claims, wherein
the display has associated with the scaling axis a sensitive area for changing the mean value and/or a sensitive area for changing the span of the scaling axis by a corresponding drag operation.

15. System according to any one of the preceding claims, wherein,
before carrying out the drag operation, the pointer device is used to point to a selector to chose which scaling parameter is to be changed.

16. System according to any one of the preceding claims, wherein
said pointer device comprises a mouse, a touch pad, a touch screen and/or the like.
